# EUROPEAN PATENT SPECIFICATION

(11) **EP 4 453 818 B1**
(45) Date of publication and mention of the grant of the patent: **08.10.2025**
(21) Application number: 23702306.4
(22) Date of filing: 26.01.2023
(51) Int. Cl.: G06Q 10/083

(54) **A MAIL PIECE DELIVERY AND/OR COLLECTION SYSTEM AND METHOD**
SYSTEM UND VERFAHREN ZUM ZUSTELLEN UND/ODER SAMMELN VON POSTSTÜCKEN
SYSTÈME ET PROCÉDÉ DE LIVRAISON ET/OU DE COLLECTE D'ÉLÉMENT DE COURRIER

(30) Priority: 27.01.2022 GB 202201056
(43) Date of publication of application: 30.10.2024
(73) Proprietor: Escher Group (IRL) Limited, Dublin 2 D02WV96 (IE)
(72) Inventor: EMERY, Keith, Dublin 2, D02 WV96 (IE); KILDUFF, Alan, Dublin 2, D02 WV96 (IE)
(74) Representative: Marks & Clerk LLP
(86) International application number: PCT/EP2023/051881
(87) International publication number: WO 2023/144245

(56) References cited:
- US-A1- 2015 145 643
- US-A1- 2018 357 848
- US-A1- 2019 325 388
- US-A1- 2020 219 348
- US-A1- 2021 192 443

## Description

### Field

The present invention relates to mail piece delivery and collection systems and methods.

### Background

US 2020/219348 A1 describes systems and methods to deliver items to smart receptacles or locations secured by smart locks. US 2018/357848 A1 describes a system and method for using a mobile device to assist with the efficient and secure delivery of item, according to which the mobile device can assist an item deliver to lock or unlock secure item delivery receptacles. US 2019/325388 A1 describes a system and method for the use of geofences to coordinate and track delivery of items.

The Universal Postal Union (UPU) reported in 2018 that 75% of the world suffers from poor addressing or none at all, and the last mile of a parcel's journey has been found to most problematic.

The concept of geofences where GPS co-ordinates are checked to see if they correspond to a position within a defined area is well known.

The use of a near field communication (NFC) tag at an address or other delivery location to record a delivery to that address or location is also known.

It is desirable to provide improved efficiency, accuracy and/or monitoring of delivery or collection procedures, for example in relation to delivery or collection of mail pieces to multiple locations on a delivery or collection round. Even small improvements in efficiency or accuracy can have significant effects in reduction of time and resources, reduction in errors, and potentially reduction in damage or loss of mail pieces.

### Summary

Aspects of the invention are in accordance with the appended independent claims. Various optional features are the subject of the appended dependent claims.

There is described herein a method of assisting and/or monitoring delivery/collection of a plurality of mail pieces, each mail piece being delivered to or collected from a respective property or receptacle and each property or receptacle having a respective address or identifier, the method comprising:
using a delivery/collection device, which includes or is connected to location-determining circuitry, to determine location during a delivery/collection round;
using at least one database to obtain data and determine, using the data, for each property or receptacle a boundary defining a geofence region; and
the method further comprises:
   determining using the location-determining circuitry whether the delivery/collection device is within the geofence region for a property or receptacle for which a mail piece is to be delivered/collected; and
   issuing at least one communication and/or performing at least one action using the delivery/collection device in response to the presence of the delivery/collection device in the geofence region.

The database may store boundary data defining geofence regions. The data may comprise boundary data. The data may comprise geolocation data. The database may map geolocation data to addresses and/or identifiers and may be used to obtain for each property or receptacle a boundary defining a geofence region.

The delivery/collection device may comprise a handheld delivery/collection device and/or wherein the delivery/collection device comprises GPS circuitry and/or wherein the delivery/collection device comprise an **RFID** reader or other NFC-device reader

The property or receptacle comprises at least one of a residential or business property, a house, an apartment, an office, a site, a depot, a mail box or post box, a locker.

The at least one communication may comprise information concerning how mail pieces are to be delivered/collected for the property or receptacle, for example delivery instructions set by a recipient, sender or other user.

The information may comprise at least one of:
information concerning a drop-off/pick-up location for a mail piece;
information concerning which door of the property to use;
an entry code;
information concerning a hazard, for example presence of a dog or other animal, occurrence of building or other works;
information concerning the recipient or sender, for example that they have a disability;
information concerning events that are scheduled; and/or
contact information of a recipient, sender or other user.

The delivery/collection instructions may be set by the recipient, sender or other user.

The communication may comprise an alert in response to determining that the location determined by the device in respect of delivery/collection of one of the mail pieces does not match the geofence region for the mail piece delivery/collection.

The location is determined by the device in response to input, for example by the user, indicating that said mail piece has been delivered or collected.

The at least one communication may comprise or form part of a delivery/collection protocol.

The delivery/collection protocol may include a workflow to be performed by the user.

The workflow for delivery/collection of a mail piece for a property or receptacle may include at least one of:
taking a photograph of the mail piece and/or the property and/or the receptacle;
placing the delivery/collection device in proximity to, or otherwise communicating with, the or a **RFID** device or other communication device;
obtaining a signature or other confirmation from a recipient, sender or other user.

The method may comprise providing an alert by the delivery/collection device in response to at least one part of the workflow not being completed and/or correct.

At least some of the properties or receptacles may include a communication device, for example a radio-frequency identification (RFID) device or other near-field communication (NFC) device, and the method may comprise using the delivery/collection device to communicate with the communication device, for example thereby to confirm the presence of the delivery/collection device and/or the static communication device at the property or receptacle.

The delivery/collection instructions or other information may be stored by the communication device and the method may comprise obtaining the delivery/collection instructions or other information by communication between the delivery device and the communication device.

The communication with the communication device may be in accordance with, or form part of, the or a delivery/collection protocol.

The delivery/collection protocol includes checking that the determined location of the delivery/collection device and a stored location for the static communication device match.

The method comprises issuing an alert if the determined location of the delivery/collection device and the stored location for the static communication device do not match.

For at least one of the properties or receptacles to which mail pieces are to be delivered/collected there may be one or more other properties or receptacles, for example one or more other flats, apartments, offices or mailboxes, within the geofence region for that property or receptacle.

The method may comprise at least one of:
displaying a list of properties or receptacles within the geofence region using the delivery/collection device;
indicating using the delivery/collection device mail pieces to be delivered/collected for the current geofence region.

The method may comprise determining whether a communication device, for example an RFID or other NFC device is expected to be present for the property or receptacle, and issuing an alert if communication with the communication device does not occur and/or storing or outputting a confirmation if communication with the communication device does occur.

The method may comprise issuing an alert and/or entering the delivery/collection device into a delivery/collection mode in response to the delivery/collection device passing through a geofence region and/or crossing a boundary.

The method may comprise preventing issuance of the alert and/or preventing entry into the delivery/collection mode if the device is in a transit mode during which a user or delivery/collection vehicle is travelling between, to or from properties or receptacles.

The method may comprise monitoring speed of movement of the delivery/collection device and/or delivery/collection vehicle and placing or maintaining the device in the transit mode in response to the monitored speed of movement being indicative of driving, for example in response to the monitored speed of movement.

The method may comprise placing or maintaining the device in the transit mode in response to user input and/or automatically.

The method may comprise providing route information to the user via the delivery/collection device.

The method may comprise sending at least one message to a mail piece recipient/sender or other user in response to the user device having a location within the geofence region or within a further, associated geofence region.

The further geofence region may be defined by a further boundary that is more distant from the property or receptacle than the boundary.

The at least one message may comprise an alert and/or comprises delivery/collection information, for example requirement to sign and/or pay on delivery/collection of the at least one mail piece.

The method may further comprise sending data to and/or receiving data from a remote server by the delivery/collection device, wherein the remote server is configured to monitor delivery/collection of mail pieces and/or performance and/or to provide delivery/collection instructions and/or route information.

The method may further comprise monitoring progress of delivery/collection of the mail pieces and issuing an alert if times between successive deliveries/collections are longer than expected and/or if the delivery/collection device or vehicle diverges from an expected route.

The delivery/collection device may comprise or be configured to communicate with a drone or other delivery/collection vehicle.

The method may comprise comparing location of the drone or other delivery/collection vehicle at a time of delivery/collection of a mail piece to a corresponding geofence region, for example thereby to determine correct delivery/collection.

The geolocation data may comprise at least one of GPS co-ordinates, longitude and latitude data, what3words (RTM) data or other location reference data.

There is described herein a system for assisting and/or monitoring delivery/collection of a plurality of mail pieces, each mail piece being delivered to or collected from a respective property or receptacle and each property or receptacle having a respective address or identifier, the system comprising:
a delivery/collection device, which includes or is connected to location-determining circuitry, to determine location during a delivery/collection round; and
at least one database that stores data that can be used to obtain for each property or receptacle a boundary defining a geofence region.

The delivery/collection device may be configured to:
determine using the location-determining circuitry whether the delivery/collection device is within the geofence region for a property or receptacle for which a mail piece is to be delivered/collected; and
issue at least one communication and/or perform at least one action using the delivery/collection device in response to the presence of the delivery/collection device in the geofence region. to obtain data and determine, using the data, for each property or receptacle a boundary defining a geofence region

The database may store boundary data defining geofence regions. The data may comprise boundary data. The data may comprise geolocation data. The database may map geolocation data to addresses and/or identifiers and may be used to obtain for each property or receptacle a boundary defining a geofence region.

There is described herein a delivery/collection device, which includes or is connected to location-determining circuitry to determine location during a delivery/collection round, wherein
the delivery/collection device is configured to communicate with at least one database that stores boundary data defining geofence regions;
the delivery/collection device is configured to obtain for each property or receptacle a boundary defining a geofence region; and
the delivery/collection device is further configured to:
   determine using the location-determining circuitry whether the delivery/collection device is within the geofence region for a property or receptacle for which a mail piece is to be delivered/collected; and
   issue at least one communication and/or perform at least one action using the delivery/collection device in response to the presence of the delivery/collection device in the geofence region.

In another aspect, there is provided a computer program product comprising computer-readable instructions that are exectable to perform a method as claimed or described herein.

Features in one aspect may be applied as features in any other aspect. For example any of method, system or device features may be applied as any other of method, system or device features.

### Brief Description of Drawings

Various embodiments of the invention will now be described by way of example only, and with reference to the accompanying drawings, of which:
Figure 1 is a schematic diagram of a mail piece delivery or collection system according to an embodiment;
Figure 2 is a schematic diagram illustrating collection of a mail piece from a property using the system of claim 1;
Figure 3 is a schematic diagram illustrating use of the system of Figure 1 in performing a delivery or collection round; and

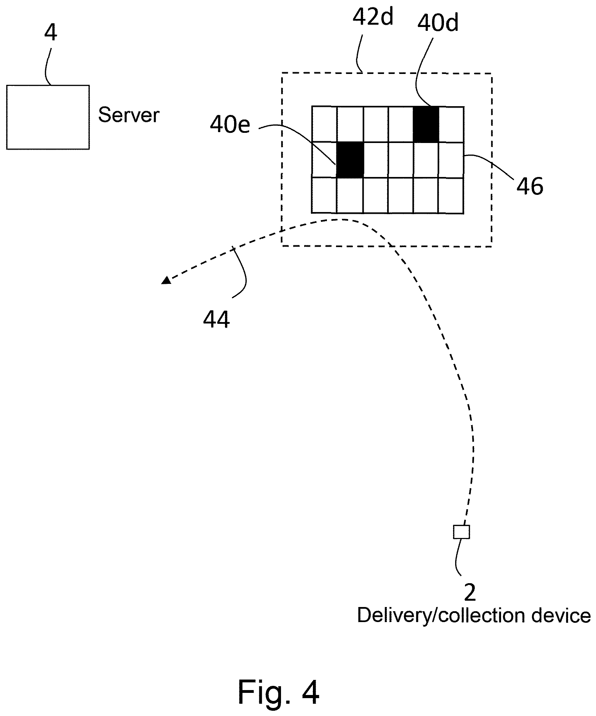

Figure 4 is a schematic diagram use of the system of Figure 1 in performing delivery or collection at an apartment block.

### Detailed Description

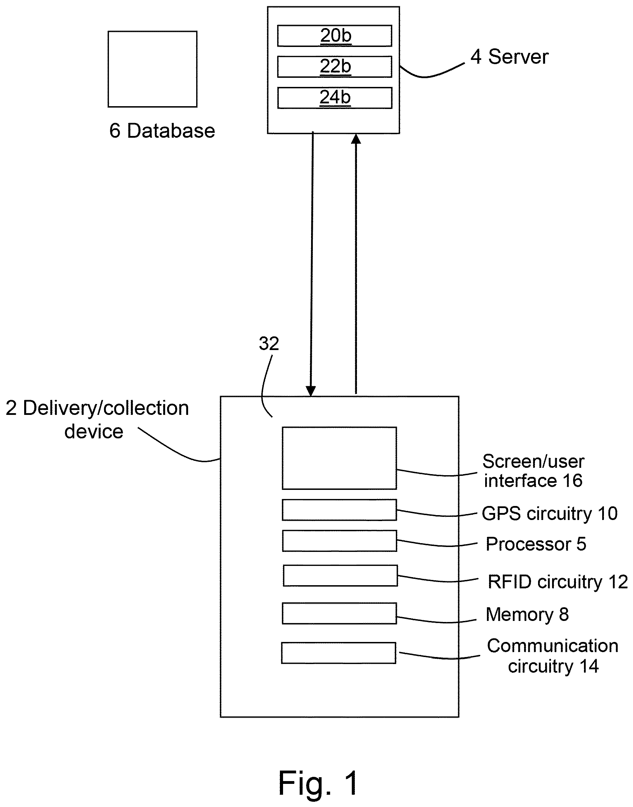

Figure 1 represents schematically a mail piece delivery or collection system according to an embodiment.

The system of Figure 1 comprises a delivery/collection device 2, a remote server 4 and a database 6 which is in communication, or forms part of, the remote server 4.

The delivery/collection device 2 comprises a processor 5, a memory 8, GPS circuitry 10, radio-frequency identification device (RFID) circuitry 12, telecommunication circuitry 14, and a display screen 16.

In the present embodiment, the display screen 16 is a touchscreen that also functions as a user input device. In alternative embodiments, a separate user input device is included, for example a keyboard or touchpad.

The GPS circuitry 10 is operable to determine the location of the delivery/collection device 2 using GPS communication techniques. The RFID circuitry 12 is operable to communicate with RFID devices for example installed at a property or receptacle, and to read data from and/or write data to such RFID devices.

The telecommunication circuitry 14 is operable to communicate with remote devices, for example remote server 4, or the mobile telephone or other device of the or a user, using any suitable known telecommunication techniques for example any suitable 2G, 3G, 4G or 5G techniques.

The processor 5 is configured to control operation of the delivery/collection device 2, to receive data from and/or send data to the various components of the device, to receive user input via the display screen 16 or other user input device, and to provide output to a user via the display screen 16 and/or via audio and/or haptic devices that may also be included in the delivery/collection device 2 in variants of the embodiment. The processor 5 is also configured to send data to and/or receive data from the remote server 4.

The output to a user may comprise a series of interlinked screens or windows provided via the display screen 16 and forming part of a delivery/collection workflow. The workflow also includes monitoring location of the device 2 using the GPS circuitry 10, interacting with RFID devices using the RFID circuitry 12, and communicating with the remote server 4. The processor 5 in operation reads and executes a program stored in the memory 8 to provide the workflow.

The workflow provides interactive data display and entry to enable a user to manage and be guided or instructed with regard to a delivery/collection round, and provides monitoring of actions and movements of the user during the delivery/collection round. A delivery/collection round can begin and end at the same point or can begin and end at different points, and can be for delivery/collection to/from a single property or receptacle or to multiple properties/receptacles.

Any other suitable location determining circuitry or techniques can be used in alternative embodiments.

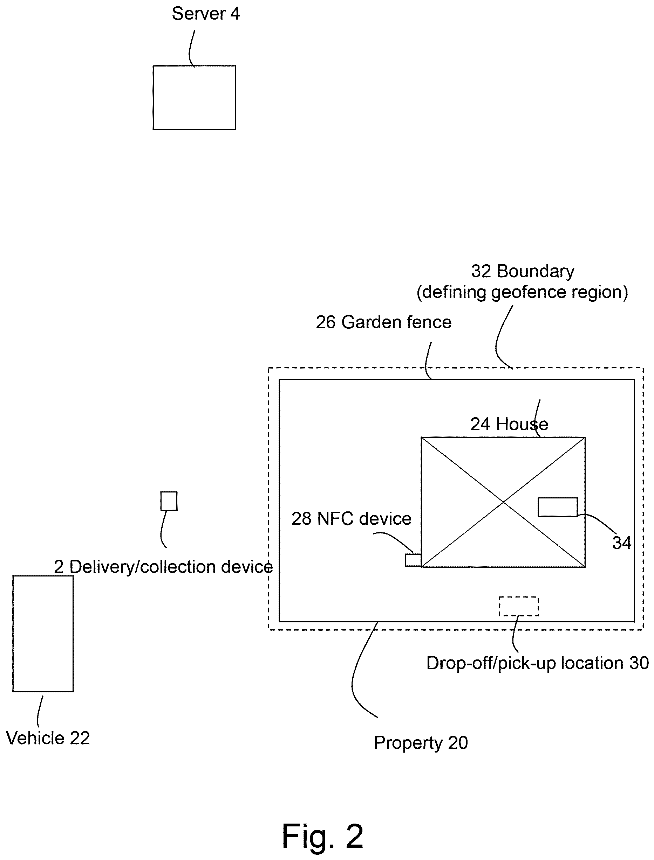

Figure 2 is a schematic illustration of the delivery/collection device 2 of Figure 1, which may be a handheld device, approaching a property 20 during a delivery round performed by a user (not shown). The user carries the delivery/collection device 2 during the delivery round, for example holding it in his or her hand, keeping it in pocket or bag and/or attaching it to themselves. In the present example, the user travels in a vehicle 22 and may attach the device 2 to a charging and/or communication point in the vehicle during travel between properties or receptacles.

The property 20 in this example is a residential property that includes a house 24 and surrounding garden delimited by a garden fence 26 that also represents the outer limits of the property 20. The property may be any other suitable type of property or other location to or from which a mail piece is to be delivered or collected. Mail pieces may also be delivered to or collected from any suitable receptacles for example mail boxes or parcel lockers, as well as or instead of properties.

The property 20 includes a near field communication (NFC) device 28 in the form of RFID device in this example. Any other form of static or other communication device may be provided in other embodiments.

A drop-off or pick-up location 30 is indicated by dashed lines on the figure. In this example, the drop-off/pick-up location is defined as being behind a bin storage area (not shown) at the side of the house 24. The drop-off/pick-up location 30 is the preferred location of the resident of the house, or other customer, for where mail pieces should be left (or from which mail pieces should be collected) if, for example, no-one is present at the property when delivery (or collection) occurs. The drop-off/pick-up location for the property 20 is stored in the database 6 and is accessible to the remote server 4 and the delivery/collection device 2. Any other suitable delivery or collection instructions may be provided in other embodiments.

The database may comprise a database of addresses or identifiers and, associated with each address or other location identifier, GPS data and/or other data defining a boundary of a geofence region for each corresponding property or receptacle.

A boundary 32 defining a geofence region using a set of co-ordinates is indicated in Figure 2 by a dashed line.

The boundary 32 is set by the remote server 4 based on a physical location, for example a geolocation e.g. GPS co-ordinates, for the property 20. In this embodiment, a geolocation or other physical location for each property address or other delivery/pick-up location in a region, for example a town, city, county or country, is stored in database 6. The database stores co-ordinates that define the boundary of the property, in this example the boundary of the garden of the property.

The boundary of the property, represented by co-ordinates in the database 6 is used as a geofence for the property and the region inside the boundary 32 can be referred to as a geofence region. In Figure 2, there is a slight mismatch between the garden fence 26 of the property and the geofence 32, as in this case the garden fence is not positioned precisely at the boundary but is offset by a few cm, as often may occur in practice. Although the property boundary and thus geofence 32 has a rectangular shape, the shape of property boundaries can vary widely, and thus the geofences for different properties are not restricted to having a particular shape but instead are the same as boundaries of the actual properties in this embodiment.

In other embodiments, or in situations where a property location is stored but co-ordinates defining an outer boundary of the property are not stored or otherwise available, or for example for mail lockers or other receptacles or property types in some embodiments, any other suitable method can be used to determine the shape and size of the boundary 32, and thus the geofence and geofence region. For example, if a property boundary is not stored or is other otherwise not accessible to the system, a circle, square, rectangle or other shape may be used by default as the boundary. For instance, a default radius or width and/or length or other dimension may be set, and the boundary may be set calculated on a point location of the property, and the default shape and dimension(s) of the boundary. For instance, in such embodiments the geofence may be set as a circle, rectangle, square or other shape centred on the stored location of the property. In other embodiments, the boundary 32 may be the same shape as the property but extended or reduced by a fixed distance in each direction, or based on the stored boundary of the property in any other desired manner.

Data representing the boundary 32 of the geofence region is stored in the database 6 and is available to the server 4 and the delivery/collection device 2, for instance via a real-time connection between the server 4 and the delivery/connection device 2. In alternative embodiments, or modes of operation, the delivery/collection device 2 obtains and/or stores the geolocation or other physical location of the property 20 and calculates the boundary, and thus the geofence region, itself. For example, the delivery/connection device 2 can download relevant data, such as property locations and boundaries, for a particular delivery and/or collection round from the server 4 in advance. The delivery/connection device 2 may in some embodiments synchronise data that it stores with data stored at the server 4, either at selected intervals or on command.

In operation, at the start of a delivery (or collection) round, the addresses or identifiers of the properties or receptacles where mail pieces are to be delivered (or collected) are provided to the delivery/collection device 2, together with the determined boundary 32 defining a geofence region for each property or receptacle.

During the delivery (or collection) round, the processor 5 monitors the current location of the delivery/collection device 2 as determined by the GPS circuitry 10. Actions that are performed based on the determined current location are now described in relation to delivery at one property 20 with reference to Figure 2.

The user, in this case a postal delivery person, is informed of the next delivery address on the delivery round by a message displayed on the screen 16 of the device 2. The user drives to the address of the property 20 in vehicle 22, exits vehicle and walk towards the property.

The processor 2 continues to monitor the current location as determined by the GPS circuitry inside the boundary 32, and thus in the geofence region for the property 20.

In response to determining that the current location of the device 2 is inside the boundary 32, the device 2 issues at least one communication to the user, for example via display of text and/or image(s) using screen 16. In the present example, the screen 16 is used to provide the user with delivery instructions that indicate the preferred drop-off/pick-up location 30 for this property 20.

In the present example, the user in the form of the postal delivery person knocks on the door of the property. No-one is present in the property and in this case the mail piece to be delivered is a package that is too large to fit through a mail flap on the door of the property. Therefore, the user leaves the mail piece in the drop-off location 30 and then provides input via the device indicating that the mail piece has been delivered.

In response to the user input indicating that the mail piece has been delivered, the device 2 provides an instruction to the user to interact with the RFID device 28 at the property 20. The user then places the device 2 against, or in proximity to, the RFID device 28 and identifier data associated with the RFID device 28 is transmitted from the RFID device 28 to the delivery/collection device 2. A confirmation may be stored and/or outputted if communication with the communication device occurs correctly, and the confirmation may comprise the RFID identifier.

The device 2 stores the identifier data and/or sends it to remote server 4, as evidence that the user was present at the property 20 or receptacle.

The device 2 then provides an indication to the user via screen 16 of the next address on the delivery/collection round where a mail piece is to be delivered (or collected).

In alternative embodiments, the device 2 is configured to indicate to the user that one or more other actions should be taken as part of a delivery (or collection) workflow as well as or instead of interacting with the RFID device, for example taking a photograph of the mail piece and/or the property and/or receptacle, or obtaining a signature or other confirmation from a recipient or other person.

The processor 5 is able to perform verification processes with regard to delivery of the mail piece to the property 20. The processor 5 checks that a stored location for the identifier obtained from the RFID device 28 matches the location of the device 2 determined by the GPS circuitry 10 at or near the delivery time. Alternatively or additionally, the processor 5 can check whether the location of the property 20 to which the specified mail piece is delivered matches the location determined by the device at or near the delivery time. The delivery time can, for example, be determined based on the input provided by the user when the user left the mail piece at the drop-off location 30.

If the processor 5 determines that there is a mismatch between the determined current location and the expected delivery or collection location for the mail piece and/or property 20, or determines that there is any other problem with regard to a delivery or collection location it can issue one or more alerts, for example audible, visual and/or haptic alerts to the user, via the device 2, and/or can send alert messages to the server 4 or other device. Alert messages may, for example, be sent to a mobile telephone or other device associated with the user or vehicle 22, as well as, or instead of, alerts being issued by the device 2.

Other verification or monitoring may be performed, for example by the delivery/collection device 2 and/or the server 4, based for instance on locations determined using the GPS circuitry 10 of the device 2 at different times. For instance, an alert may be issued, a performance flag may be raised, or monitoring data may be highlighted, sent or stored, if a device 2 seems to be present within a particular geofence region boundary 32 for an unexpectedly long or short period of time (e.g. if a dwell time is unexpectedly long or short) or if a user seems to be following an unexpected route, or diverging from an expected route, or delivering mail pieces in an unexpected or non-optimal order, or travelling too quickly or too slowly (for example, exceeding a speed threshold) during a delivery or collection, or a delivery or collection round.

Alerts and/or alert messages may be output if part of a workflow, for example a delivery or collection workflow, has not been completed or has not been performed correctly. For example, an alert could be issued if the device 2 has not interacted with the RFID device 28 or other static device, or if a photograph of the mail piece has not been taken, or a signature not obtained, despite such action(s) being instructed or required as part of the workflow. It may, for example, be determined that the action has not been completed if it has not occurred within a threshold time period following an earlier action or event, for example entry to the geofence region, or in response to change in location of the user device 2, for example in response to the device 2 having left the geofence region without the action being completed.

In the example described in relation to Figure 2 the delivery instructions provided to the user indicated the preferred drop-off/pick-up location 30 for property 20. Any other desired information, for example concerning how mail pieces are to be delivered to, or collected from, the property may be provided to the user by the device 2. For example, any one or more of the following may be provided to the user: information concerning a location to leave a mail piece if a recipient is not present; information concerning which door of the property to use; an entry code; information concerning a hazard, for example presence of a dog or other animal, occurrence of building or other works; information concerning the recipient, for example that they have a disability; information concerning events that are scheduled; and/or contact information of a recipient or other user.

In the embodiment of Figure 2, the device 2 may highlight the expected delivery/collection item(s) as well as pictorial representations of the services to be delivered, hazards etc. Once the device has entered an expected geofence region (e.g. velocity notwithstanding) it will alert the user if the geofence is left without the expected delivery/collection having been completed.

Instructions or other information concerning delivery/collection for individual properties or receptacles can be set, for example by individual recipients, residents, property owners, customers or other users. For instance, in the embodiment of Figure 2, a resident may enter instructions or other information using a user interface via a home computer 34 or other device. The instructions or other information can be stored at the server 4 and sent to the delivery/collection device 2 if delivery/collection is due to take place for the property or receptacle in question. The instructions or other information may be sent to the delivery/collection device 2 in advance of a delivery/collection round, or may be sent in response to the delivery/collection device 2 being at or near the property or on request of the user.

In some embodiments, the instructions or other information concerning delivery/collection for an individual property or receptacle could be stored by the RFID device or other device at the property or receptacle, if the RFID device or other device has a memory and suitable processing capacity and/or communications capability. The data may then read by the delivery/collection device 2 when at or near the property or receptacle. For example, data could be transferred from a mobile telephone or other mobile device when in range of the RFID device or other device, or the RFID device or other device could be provided with Wi-Fi communication circuitry or other communication circuitry capable of communicating with a user's computer. However, in many embodiments the RFID device is a passive device with only short range RFID communication capability and thus the data would usually be obtained by the delivery/collection device 2 from the server 4 or other remote storage.

The communication with the user, for example via touchscreen 4, and the providing of instructions or other information, and receipt of user input, described above in relation to Figure 2 in connection with delivery of a particular mail piece can form part of a workflow that is included in a delivery or collection protocol in accordance with which the delivery/collection device 2 operates.

The protocol may include or represent a set of rules and/or preferences for a delivery or collection round, including delivery to or collection from individual properties or receptacles, for example as discussed in relation to Figure 2.

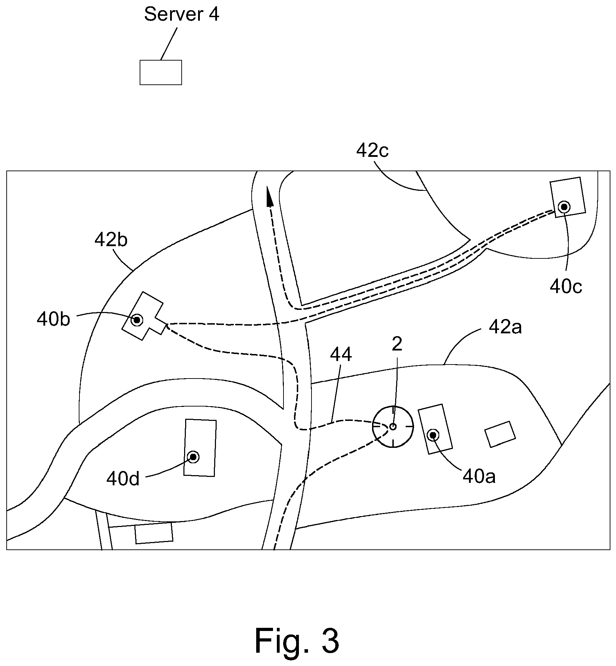

Figure 3 illustrates schematically the performing of a delivery or collection round in accordance with an embodiment. Description is provided in relation to a performance of a delivery round but described features could also apply to a collection round. Furthermore, a delivery round may include at least some collections and, likewise, a collection round may include at least some deliveries, in some embodiments.

In the example illustrated schematically in Figure 3, a user performs a delivery round that comprises delivering mail pieces to delivery locations 40a, 40b and 40c with the assistance of the delivery/collection device 2, where delivery locations 40a, 40b, 40c are houses each having a respective address

Boundaries 42a, 42b, 42c are set for each of delivery locations 40a, 40b, 40c in a similar manner to that described in relation to Figure 1, by determining GPS co-ordinates for each address, e.g. from GPS and address information stored in a database. The GPS co-ordinates comprise both a location 40a, 40b, 40c for each property and sets of GPS co-ordinates or other information that represent the boundary 42a, 42b, 42c of each property. The boundaries 42a, 42b and 42c are used by the delivery/collection device 2 as geofences that define geofence regions.

The boundaries 42a, 42b, 42c in this example correspond to the actual boundaries of the properties, for example the same or substantially the same as those recorded in a land registry or other property records.

Any other suitable source of property boundaries may be used. Alternatively or additionally geofences may be set, at least in part, based on user preferences (e.g. preference of the delivery person or delivery company, or preference of a resident, customer or other user), property type or other characteristic, and may be the same or different for different addresses or other delivery locations.

A route followed by the user is indicated generally by dashed line 44.

The delivery/collection device 2 may be configured to generate a suggested route based on the locations where mail pieces are to be delivered and/or collected, for example using any suitable mapping or route calculation technology. The device 2 may, alternatively or additionally, display a list of the addresses where mail pieces are to be delivered and/or collected. The list, route, delivery/collection locations and/or map may be displayed using the screen 16. In other embodiments or modes of operation, the user can select their own route and order of delivery and/or collection.

The delivery/collection device 2 can have various modes of operation between which it switches. In the example of Figure 3, delivery/collection device 2 has a transit mode and a delivery/collection mode.

The processor 5 monitors speed of movement the device 2, for example based on measurements performed using the GPS circuitry 10 at a series of known times or time intervals. The processor 5 places or maintains the device 2 in the transit mode in response to the monitored speed of movement being indicative of driving, for example in response to the monitored speed of movement, for example a rolling average of the speeds determined from the location measurements, being above a threshold.

The processor 5 also monitors the location of the device 2, determined by the GPS circuitry 10 relative to geofence boundaries 42a, 42b, 42c for properties to which mail pieces are to be delivered. The processor 5 may, for example, move the device 2 from being in the transit mode to be in a delivery/collection mode in response to the device 2 entering one of the geo-fence region defined by the boundaries 42a, 42b, 42c. Time spent by the delivery/collection device 2 within each geofence region may be referred to as dwell time, and dwell times are stored and/or monitored by the system in some modes of operation.

In various methods of operation, the processor 5 determines the current mode, or transitions between different modes, based on a combination of the determined speed and the determined location of the device 2, and/or one or more further parameters for example the current position in the workflow and/or recent user input or other actions and/or data from external sources, for example traffic data or data from sensors or systems of the vehicle 22. The various data can be used to determine whether it is likely that the user is currently travelling between locations, for example using a car, van, bicycle or other vehicle, or whether the user has arrived at a location and is about to, or is in the process of, performing a collection or delivery.

As well as, or instead of, the methods described in the previous paragraph, an operating mode, for example the transit mode or the delivery/collection mode, and/or transitions between such operating modes may be determined based on user input via the device 2. For example, a user may provide input to select the transit mode upon entry to the vehicle 22 and may provide input to exit transit mode upon parking or exiting the vehicle.

The issuing of alerts or alert messages, or other workflow actions, may depend on the operating mode of the device, as well as actions of the user, determined location, and/or input to the device 2. For example, the processor 2 may be configured to control the device 2 to enter the device into a delivery mode 2 in response to the delivery device crossing a geofence. However, in this example the processor 2 may issue an alert and/or prevent entry into the delivery mode in response to the delivery device crossing a geofence if the device is in a transit mode and the current speed of movement is above a threshold, as this suggests that the user has omitted to stop to make a delivery or collection.

It is recognised that while traveling to a property, receptacle or other location, a device 2 (e.g. carried by the user) may cross one or more geofences. The device recognises that it is traveling using GPS velocity parameters (e.g. obtained from location and time measurements) and may thus ignore these events. It is also possible for the user to manually set their status as 'In Transit' (e.g. to enter or maintain transit mode) to stop false alerts in built up areas such as a high street where geofence regions of individual properties may overlap.

Options and/or instructions provided to the user by the device may depend on the operating mode, and may change when for example the device switches between transit mode and delivery mode. For example, in transit mode a delivery route and/or list of delivery locations may be displayed by the device 2, whereas in delivery/collection mode instructions or other information concerning a specific delivery/collection and/or a specific delivery/collection address may be provided.

The delivery/collection device 2 in some methods of operation may also be configured to communicate, either directly or indirectly, with a recipient/sender, customer or other user as well as with the mail piece delivery/collection person.

For example, in some embodiments the delivery/collection device 2 is configured to send automatically at least one message to a mail piece recipient/sender or other user in response to the user device having a location within a predetermined proximity to an address and/or geolocation boundary address where a collection or delivery is to be made. Thus, the user recipient/sender or other user can be given advance notice that the delivery/collection person is at or is approaching their property or other location with which they are associated.

In the example of Figure 3, message(s) are sent automatically to the recipient in response to the device 2 crossing the further boundary 48 in respect of delivery to location 40a, but no messages are sent to the recipients of deliveries to locations 40b, 40c as those recipients had not selected in their respective settings or profiles the option of receiving automatic messages. In other methods of operation, automatic messages may be sent in response to entry into geofence regions defined by boundaries 42a, 42b, 42c as well as or instead of in response to crossing one or more further boundaries that may be set. For example, it is possible to set one or more boundaries that are more distant from one or more properties or groups of properties than the geofences for those properties, and take desired actions in response to crossing such boundaries. For example, a notification may be sent to an operator, user or any other party, or data may be stored, indicating that a delivery/collection device 2 has crossed a boundary defining a region or neighbourhood where all, or a subset, of delivery/collection properties are located, for instance providing a start time or end time for a delivery/collection round or part of a delivery/collection round. In some methods of operation, message(s) may be sent in response to device 2 exiting the geofence region(s) as well as or instead of entry to the geofence region(s), for example to let the recipient know that the delivery/collection person has departed.

The messages may be sent to devices identified in profiles for recipients/senders, customers or other users that are stored in, for example, the database 6 and that are accessible to the device 2.

The at least one message may comprise an alert and/or delivery or collection information, for example whether there is a requirement to sign and/or pay on delivery/collection of the at least one mail piece. Thus, a recipient/sender may be warned that they may be shortly be required to make a payment, provide their signature or perform other action. It can also give the opportunity for the recipient/sender or other user to send a response message, for example to the server 4 and/or device 2, for instance to cancel or rearrange the delivery/collection or to call the delivery person to speak to them to provide further information or confirmation.

In the embodiment of Figure 3, the recipient receives an SMS or similar notification when the delivery/collection device passes through the further boundary or boundary and can thus be prepared for the delivery/collection. The notification can tell them if they will be required to sign for the delivery, pay cash-on-delivery or customs charges or similar costs. If the delivery is to a high security location (e.g. a bank) then an additional notification may be provided to the delivery/collection person.

Returning to the delivery round of Figure 3, the delivery of mail pieces to the properties of 40a, 40b and 40c is performed following the same or similar procedures as those described in relation to Figure 2. The device 2 may, for example, use a combination of an electronic manifest and local datastore of the device 2 to predict the next delivery/collection job and highlight it for the user, along with information such as estimated time to arrival, navigation options and a summary of the services to be delivered. In some embodiments, time slots for delivery/collection may be set, and available or expected time slots may be indicated to a user, or recipient, sender or customer.

After delivery to property 40c the delivery/collection round may be completed and the user may return to a depot or other location, and/or there may be a notification either to or from the user that the delivery/collection round is completed.

In a variant of the example of Figure 3, the delivery/collection round extends to further delivery locations 40d and 40e. Delivery locations 40d and 40e are particular apartments, within an apartment block 46 having multiple apartments. Each apartment in the apartment block has a respective, different address.

In the present example, the GPS co-ordinates, or other physical location, used by the system is the same for all apartments in the apartment block 46, and the boundary 42d set as a geofence in respect of apartments 40d and 40e has a rectangular shape in the same or similar proportions to a footprint of the apartment block 46 in this example. Thus, in this example, there are other properties, in this case other apartments, within the same boundary 42d, and thus geofence region, as the apartments 40d and 40e to which the mail piece is to be delivered, and the same boundary 42d and geofence region is used for both apartments 40d and 40e..

With regard to the properties 40d and 40e, there are multiple potential properties to which mail pieces could be delivered in the apartment building 46. The delivery/collection device 2 is configured to operate such that deliveries/collections within the same apartment block or other common location are clustered together or otherwise processed together or using the same specific sub-process or workflow. For example, all relevant addresses within the same geofence region may for part of a single delivery/collection sequence or other process. In the present example, the workflow of the device 2 in respect of properties 40d and 40e is different to that for delivery/collection for properties 40a, 40b, 40c. In response to crossing the boundary 42, the device 2 displays a list of properties within the apartment building to which mail pieces are to be delivered, in this case apartments 40d and 40e. The mail delivery person then enters via the device 2, and/or interacts with a respective RFID device at each property 40d and 40e, when the mail piece(s) are delivered to or collected from each apartment 40d, 40e.

Any other suitable workflows, or interactions with a user, can be provided in alternative embodiments relating to geofence regions that include multiple properties (e.g. apartments in an apartment building or offices in an office building, or parcel lockers in a set of parcel lockers). For example, any desired system for issuing alerts or notifications, for instance in response to mail pieces not have being delivered/collected to or from all necessary properties within the geofence region. Instructions to the user via the device 2 may be provided in any suitable manner. For example, properties may be listed or otherwise presented in an order that provides the most efficient delivery route through the apartment block or other structure within the geofence region. In some embodiments, a drop list of available properties within a particular geofence region (e.g. in an apartment of office building) may be provided, and for example the list may be filtered to show the properties within the geofence region where mail pieces are to be collected/delivered.

According to embodiments, information can be exchanged between the device 2 and the server 4 before, during and/or after a delivery/collection round. The server 4 can be used to monitor performance, efficiency or problems during a single delivery/collection round and/or across multiple delivery/collection rounds. The server can also monitor performance, efficiency or problems in respect of particular delivery/collection people or other users, for example based on entered and stored user identifiers. For example, the server can be used to monitor dwell time, and for example determine that a particular user has taken too long with a particular geofence region, for instance based on previous performance or based on the size or other characteristics of the geofence region or associated property. In another example, the server may determine that a user has taken, or started taking, a non-optimal route between locations either repeatedly or in a single instance, and may issue advice or alert(s) accordingly. Any other desired performance, efficiency, problem-monitoring or alert processes may be performed in alternative embodiments, and such processes may be performed by the server **4,** the device 2 or other processing apparatus, and/or may be performed in distributed fashion across the server **4,** the device 2 or other processing apparatus.

Central report data can be gathered to identify any shipments which have not been delivered within their targeted geofences. Confirmation that where a package mail piece was collected/delivered was within the geofence region defined for the delivery/collection address may also be provided.

Different preferences can be set, for example properties of workflows, boundaries, geofence regions, alerts or other procedures, user interfaces and preferences with regard to delivery/collections protocols or workflows can be set. Such preferences can be set variously, for example, by a system operator, by a mail piece delivery/collection service operator (which may or may not be the same as the system operator), by a delivery/collection person or other user, or by individual recipients, residents, property owners, customers or other users.

Individual delivery locations (e.g. properties) and/or recipients, residents, property owners, customers or other users may have associated profiles, either individually or collectively, that represent preferences and other characteristics. There may be some collective profiles, or parts of individual profiles that are common, for a neighbourhood, or an apartment building or other multi-property building or location. Delivery/collection people can also have individual or collective profiles that represent, for example, workflow preferences or other operating characteristics.

Embodiments have been described in which a delivery/collection person uses a delivery/collection device 2, for example in the form of a handheld device, to assist with delivery/collection of mail pieces. The delivery/collection device 2 can have any desired additional functionality for recording delivery/collection, monitoring performance, or communicating with the server, user, recipients/senders or other parties. For instance the delivery/collection device 2 may include a barcode reader, QR code reader, or other reading or scanning device that can be used to identify mail pieces or determine other mail piece properties. Such information read from bar codes or other identifiers may be linked to address or other information, for example by the server 4 or device 2. In other embodiments, the delivery/collection device 2 is in the form of a drone or other automatically- or remotely-controlled transportation device that can transport the mail pieces itself. In such embodiments, a delivery/collection action (e.g. dropping or picking-up a mail piece, or an alert to a drone operator to drop or pick up a mail piece) may be performed by the device 2 in response to the location of the drone or other device relative to the property or receptacle for delivery/collection, for example in response to the drone being within the geofence region. In other, similar embodiments the delivery/collection device 2 is a terminal or other device of an operator of a drone or other remotely controlled delivery/collection apparatus. Thus alerts, instructions or other information can be sent to the (drone) operator in such embodiments rather than to a delivery/collection person present at the property. In such embodiments, the communication device at the property or receptacle may be in the form of a Bluetooth, Wi-fi, or other wireless radio frequency (RF) or optical communication device that can, for example, communicate with the drone or other mail piece transportation apparatus for instance when it is in or near the geofence region.

In some embodiments, mail pieces themselves may be provided with RFID tags, or Smart labels, or other devices that provide communication capability, for example that include at least one antenna. In some such embodiments there may be communication with between the delivery/collection device 2 and the RFID tags, Smart labels or other communication devices on the mail pieces. The RFID tags, Smart labels or other communication devices may include address information or identifiers that may cross-reference to stored address information, or other information. The delivery/collection device 2 may thus obtain delivery/location information from the mail pieces themselves. In some such embodiments, the RFID tags, Smart labels or other communication devices may be used to automatically track movement of the mail piece, either directly or via communication with the delivery/collection device 2 that includes GPS circuitry. Thus, the mail piece itself may track its own delivery or collection and store itself, or instruct storage in a remote device, of its movements, delivery/collection or other events.

The device 2 may also store and/or provide information or instructions to the user in relation to other locations as well as or instead of collection/delivery locations. For example the device may store and/or provide information or instructions to the user in relation to one or more depots (for example, where a delivery/collection round may start or finish), start or end points, or fuel or charging stations.

Embodiments and methods of operation have been described in relation to delivery of mail items to properties. Such embodiments or methods of operation may also be used for collection of mail pieces from properties or delivery and/or collection of mail pieces to or from receptacles. A property or receptacle may comprise, for example, at least one of a residential or business property, a house, an apartment, an office, a site, a depot, a mail box or post box, a locker, a property or receptacle of an online or other retailer and/or within or at a warehouse or depot.

Any suitable mail pieces may be collected and/or delivered, for example letters, packages or parcels. The system may be operated or used by a public or private delivery/collection service and/or by an online or other retailer.

Although embodiments have been described in which GPS circuitry is used to generate GPS co-ordinates to represent position of the delivery/collection device, any other suitable location-determining system, protocol or data may be used in alternative embodiments.

Any suitable addressing schemes may be used, for example a unique postcode per address may be used, or a shared postcode may be used, and locations may be stored in respect of each postcode. Geocoded postcodes may be provided. Alternatively or addition, What3Words (W3W) (RTM) may be used. For instance, a geofence region may be associated with an array or other combination of W3W cells and the system may determine that delivery/collection is within one of the cells. Reverse lookup from GPS may be used as an additional validation if W3Ws are in the address. A customer or other user may provide high precision location information for a particular geofence regions (e.g. a list of W3W cells). Any other addressing information or scheme may be used, for example Google Plus Codes (RTM).

GPS accuracy may not be exact and some embodiments may allow +/- n metres or other tolerance, with regard to calculations and/or setting of geofence regions, where n can have any suitable value, for example 0.5, 1 or 2 in some embodiments.

The database 6 may store data in any suitable format and within any suitable fields. For example, in one embodiment the database includes the following data elements for a particular delivery/collection location:
- Property Identifier
- Property Name(s)
- UDPRN - Unique Property Identifier
- DPID - Delivery Point ID
- Latitude/Longitude
- Geofence boundary values (e.g. Lat/Long and/or GPS co-ordinates or any other sets of values that can define the boundary)
- Delivery/Collection Services
- Delivery/Collection Hazards
- Delivery/Collection Instructions
- Active Date/Time

As mentioned, in some embodiments an NFC tag is present at the delivery location. In at least some such embodiments, using the inbuilt NFC reading capabilities of the mobile device 2, the user scans the tag. This records a definite event used for audit purposes. In addition, the NFC serial number may be used to reference the local database for updated information, instructions to link to external systems (such as a web site) or opening a phone application with a number to call/SMS. There may be cross-referencing of location with GPS reading and geofence region to confirm that NFC location is within the geofence boundary.

Where no NFC tag is present, a user may be prompted to confirm the appropriate delivery record (for use in multiple occupancy dwellings etc). The user may be presented with a list of matched records based on the GPS location.

By combining known delivery addresses with a defined Geofence boundary area associated with that address and then cross referencing this information with the current GPS position on the mobile device being used for collections and deliveries, certain validations, workflows, warning alerts and other behaviours can be automatically triggered.

Embodiments may reduce or eliminate the possibility that when on a delivery/collection route, a delivery/collection person may miss a delivery/collection, rather than omissions only being identified when the delivery/collection person returns to their depot.

There are responsibilities for any services operator in terms of the welfare, health and safety of their employees. Some delivery locations may have specific hazards such as dogs or other animals on the property and warnings and alerts can be automatically given. Similarly, construction, live events or other events or incidents that may, for example, slow delivery/collection times or alter routes may be notified.

Proof of delivery/collection may be provided that, for example, verifies that collection/delivery occurred within the boundaries of a particular property.

Under certain contractual conditions it may be a requirement for a delivery/collection person to take a photo of where a mail piece has been left (or from where it has been collected) as proof of delivery/collection. If the item has been marked as delivered/collected and a photo has not been taken and the device is leaving the geofence region for the delivery/collection address then the delivery/collection person can be presented with an alarm or a warning.

Embodiments can help to reduce, or at least provide notification of, theft or misplacement of NFC or other devices, based on validation of the location of the NFC or other device based on the determined location of the delivery/collection device 2 when it interacts with the NFC device and verification that it is within the expected geofence region.

Embodiments can provided an assessment of productivity or efficiency, for example based on measured time (e.g. dwell time) between entering and leaving a geofence region, and conforming that it is appropriate for doing the delivery/collection. Deliveries and/or collections that take abnormally long can be identified. For example, the delivery/collection person may be taking too long or a recipient may not answer to sign for delivery etc. Problem delivery/collection people or problem delivery addresses may be identified. There is also a situation where the post may require proof that collections have been made from post boxes or other collection locations (PUDO locations, home addresses for returns etc.). This can be achieved with an NFC tag on the post box which is scanned by the mobile device 2 when the collection is made. In some embodiment, the use of an NFC tag or other similar device may be omitted, and the process may be made at least partly automatic by defining a geofence region around the post box and when the mobile device 2 enters the geofence region collection will be deemed to have taken place.

Whilst particular functionalities have been described herein as being provided by servers, memories, circuitries and processors, in alternative embodiments functionality can be provided by a single processor, memory circuitry, server or other component, or functionality provided by a single processor, memory, circuitry, server or other component can be provided by two or more processors, memories, circuitries, servers or other components in combination. Reference to a single circuitry, memory, processor and/or server or other component encompasses multiple components providing the functionality of that circuitry, memory, processor and/or server or other component, whether or not such components are remote from one another, and reference to multiple circuitries and/or processing resources encompasses a single component providing the functionality of those circuitries and/or processing resources.

Various functionalities as described can, in particular embodiments, be provided as modules obtained by operation of software and/or in hardware.

A skilled person will appreciate that variations of the described embodiments are possible without departing from the scope of the invention defined in the appended claims. Accordingly, the above description of the specific embodiments is made by way of example only and not for the purposes of limitation. It will be clear to the skilled person that minor modifications may be made without significant changes to the operation of particular embodiments and without departing from the scope of the appended claims.

## Claims

1. A method of assisting delivery and/or collection of a plurality of mail pieces, each mail piece being delivered to or collected from a respective property (20) or receptacle and each property (20) or receptacle having a respective address or identifier, the method comprising:
using a delivery and/or collection device (2), which includes or is connected to location-determining circuitry (10), to determine location during a delivery and/or collection round;
using at least one database (6) that stores boundary data defining geofence regions to obtain for each property (20) or receptacle a boundary (32) defining a respective geofence region; and
the method further comprises:
determining using the location-determining circuitry (10) whether the delivery and/or collection device (2) is within the geofence region for a property (20) or receptacle for which a mail piece is to be delivered and/or collected; and
issuing at least one communication and/or performing at least one action using the delivery and/or collection device (2) in response to the presence of the delivery and/or collection device in the geofence region, wherein
the delivery/collection device comprises a handheld delivery/collection device, the location-determining circuitry (10) comprises GPS circuitry and the device (2) further comprises a near-field communication, NFC, device reader (12),
at least some of the properties or receptacles include a NFC device (28), and the method comprises using the delivery/collection device (2) to communicate with the NFC device (28),
the communication with the NFC device is in accordance with or forms part of a delivery/collection protocol,
**characterised in that**
the delivery/collection protocol includes checking that the determined location of the delivery/collection device and a stored location for the NFC device match, and
the method comprises issuing an alert if the determined location of the delivery/collection device and the stored location for the NFC device do not match.

2. A method according to claim 1, wherein the NFC device reader (12) comprises an RFID reader and the NFC device(s) comprise RFID device(s),
and/or
wherein the property (20) or receptacle comprises at least one of a residential or business property, a house, an apartment, an office, a site, a depot, a mail box or post box, a locker.

3. A method according to claim 1 or 2, wherein the at least one communication comprises information concerning how mail pieces are to be delivered/collected for the property (20) or receptacle,
optionally:
wherein the information comprises at least one of:
information concerning a drop-off/pick-up location for a mail piece;
information concerning which door of the property to use;
an entry code;
information concerning a hazard, for example presence of a dog or other animal, occurrence of building or other works;
information concerning the recipient or sender, for example that they have a disability;
information concerning events that are scheduled; and/or
contact information of a recipient, sender or other user,
further optionally:
wherein the delivery/collection instructions are set by the recipient, sender or other user.

4. A method according to any preceding claim, wherein the communication comprises an alert in response to determining that the location determined by the device (2) in respect of delivery/collection of one of the mail pieces does not match the geofence region for the mail piece delivery/collection,
optionally:
wherein the location is determined by the device (2) in response to input, for example by the user, indicating that said mail piece has been delivered or collected.

5. A method according to any preceding claims 2-4, wherein the delivery/collection protocol includes a workflow to be performed by the user,
optionally:
the workflow includes at least one of:
taking a photograph of the mail piece and/or the property and/or the receptacle;
placing the delivery/collection device (2) in proximity to, or otherwise communicating with, the or a RFID device or other communication device;
obtaining a signature or other confirmation from a recipient, sender or other user.

6. A method according to any preceding claim, wherein the delivery/collection instructions or other information are stored by the NFC device and the method comprises obtaining the delivery/collection instructions or other information by communication between the delivery/collection device (2) and the NFC device.

7. A method according to any preceding claim, wherein for at least one of the properties or receptacles to which mail pieces are to be delivered/collected there are one or more other properties or receptacles, for example one or more other flats, apartments, offices or mailboxes, within the geofence region for that property or receptacle.

8. A method according to any preceding claim, comprising at least one of:
displaying a list of properties or receptacles within the geofence region using the delivery/collection device (2);
indicating using the delivery/collection device mail pieces to be delivered/collected for the current geofence region.

9. A method according to any preceding claim, comprising issuing an alert if communication with the NFC device does not occur and/or storing or outputting a confirmation if communication with the NFC device does occur.

10. A method according to any preceding claim, comprising issuing an alert and/or entering the delivery/collection device (2) into a delivery/collection mode in response to the delivery/collection device (2) passing through a geofence region and/or crossing a boundary,
optionally:
wherein the method further comprises preventing issuance of the alert and/or preventing entry into the delivery/collection mode if the device (2) is in a transit mode during which a user or delivery/collection vehicle is travelling between, to or from properties or receptacles,
further optionally:
wherein the method further comprises monitoring speed of movement of the delivery/collection device (2) and/or delivery/collection vehicle and placing or maintaining the device (2) in the transit mode in response to the monitored speed of movement being indicative of driving, for example in response to the monitored speed of movement,
further optionally:
wherein the method further comprises placing or maintaining the device (2) in the transit mode in response to user input and/or automatically.

11. A method according to any preceding claim, comprising:
providing route information to the user via the delivery/collection device (2). and/or
further comprising sending at least one message to a mail piece recipient/sender or other user in response to the user device having a location within the geofence region or within a further, associated geofence region,
optionally:
wherein the further geofence region is defined by a further boundary (48) that is more distant from the property or receptacle than the boundary (32),
further optionally:
wherein the at least one message comprise an alert and/or comprises delivery/collection information, for example requirement to sign and/or pay on delivery/collection of the at least one mail piece.

12. A method according to any preceding claim, further comprising sending data to and/or receiving data from a remote server (4) by the delivery/collection device (2), wherein the remote server (4) is configured to monitor delivery/collection of mail pieces and/or performance and/or to provide delivery/collection instructions and/or route information,
and/or
further comprising monitoring progress of delivery/collection of the mail pieces and issuing an alert if times between successive deliveries/collections are longer than expected and/or if the delivery/collection device (2) or vehicle diverges from an expected route,
and/or
wherein the delivery/collection device (2) comprises or is configured to communicate with a drone or other delivery/collection vehicle,
optionally:
wherein the method comprises comparing location of the drone or other delivery/collection vehicle at a time of delivery/collection of a mail piece to a corresponding geofence region, for example thereby to determine correct delivery/collection.

13. A delivery and/or collection device (2), which includes or is connected to location-determining circuitry (10) to determine location during a delivery and/or collection round, wherein
the delivery and/or collection device (2) is configured to communicate with at least one database (6) that stores boundary data defining geofence regions;
the delivery and/or collection device (2) is configured to obtain for each property (20) or receptacle a boundary (32) defining a geofence region; and
the delivery and/or collection device (2) is further configured to:
determine using the location-determining circuitry (10) whether the delivery and/or collection device (2) is within the geofence region for a property (20) or receptacle for which a mail piece is to be delivered or collected;
issue at least one communication and/or perform at least one action using the delivery and/or collection device (2) in response to the presence of the delivery and/or collection device (2) in the geofence region,
the delivery/collection device (2) comprises a handheld delivery/collection device, the location-determining circuitry (10) comprises GPS circuitry and the device further comprises a near-field communication, NFC, device reader (12),
at least some of the properties or receptacles include a NFC device (28), and the delivery/collection device (2) is configured to communicate with the NFC device (28),
the communication with the NFC device (28) is in accordance with or forms part of a delivery/collection protocol,
**characterised in that**
the delivery/collection protocol includes checking that the determined location of the delivery/collection device (2) and a stored location for the NFC device (28) match, and
the delivery/collection device (2) is configured to issue an alert if the determined location of the delivery/collection device (2) and the stored location for the NFC device (28) do not match.

14. A system for assisting and/or monitoring delivery and/or collection of a plurality of mail pieces, each mail piece being delivered to or collected from a respective property (20) or receptacle and each property (20) or receptacle having a respective address or identifier, the system comprising:
a delivery and/or collection deviceaccording to claim 13; and
at least one database (6) that stores boundary data defining geofence regions, wherein the delivery and/or collection device (2) is configured to obtain from the at least one database (6) for each property (20) or receptacle a boundary (32) defining a geofence region.

15. A computer program product comprising computer-readable instructions that are executable to perform a method according to any of claims 1 to 12.

## Patentansprüche

1. Verfahren zum Unterstützen von Zustellung und/oder Abholung einer Vielzahl von Poststücken, wobei jedes Poststück an eine jeweilige Liegenschaft (20) oder einen jeweiligen Behälter zugestellt oder von dort abgeholt wird und jede Liegenschaft (20) oder jeder Behälter eine jeweilige Adresse oder Kennung aufweist, wobei das Verfahren Folgendes umfasst:
Verwenden einer Zustellungs- und/oder Abholungsvorrichtung (2), die eine Standortbestimmungsschaltung (10) beinhaltet oder mit dieser verbunden ist, um einen Standort während einer Zustellungs- und/oder Abholungsrunde zu bestimmen;
Verwenden mindestens einer Datenbank (6), die Grenzdaten speichert, die Geofence-Regionen definieren, um für jede Liegenschaft (20) oder jeden Behälter eine Grenze (32) zu erhalten, die eine jeweilige Geofence-Region definiert; und
das Verfahren weiter Folgendes umfasst:
Bestimmen, unter Verwendung der Standortbestimmungsschaltung (10), ob sich die Zustellungs- und/oder Abholungsvorrichtung (2) innerhalb der Geofence-Region für eine Liegenschaft (20) oder einen Behälter befindet, für die bzw. den ein Poststück zugestellt und/oder abgeholt werden soll; und
Ausgeben mindestens einer Kommunikation und/oder Durchführen mindestens einer Aktion unter Verwendung der Zustellungs- und/oder Abholungsvorrichtung (2) infolge der Anwesenheit der Zustellungs- und/oder Abholungsvorrichtung in der Geofence-Region, wobei
die Zustellungs-/Abholungsvorrichtung eine handgehaltene Zustellungs-/Abholungsvorrichtung umfasst, die Standortbestimmungsschaltung (10) eine GPS-Schaltung umfasst und die Vorrichtung (2) weiter ein Nahfeldkommunikations-, NFC, Vorrichtungslesegerät (12) umfasst,
mindestens einige der Liegenschaften oder Behälter eine NFC-Vorrichtung (28) beinhalten und das Verfahren Verwenden der Zustellungs-/Abholungsvorrichtung (2) umfasst, um mit der NFC-Vorrichtung (28) zu kommunizieren,
die Kommunikation mit der NFC-Vorrichtung einem Zustellungs-/Abholungsprotokoll folgt oder einen Teil von diesem bildet,
**dadurch gekennzeichnet, dass** das Zustellungs-/Abholungsprotokoll beinhaltet zu überprüfen, ob der bestimmte Standort der Zustellungs-/Abholungsvorrichtung und ein gespeicherter Standort für die NFC-Vorrichtung übereinstimmen, und
das Verfahren Ausgeben einer Warnung umfasst, wenn der bestimmte Standort der Zustellungs-/Abholungsvorrichtung und der gespeicherte Standort für die NFC-Vorrichtung nicht übereinstimmen.

2. Verfahren nach Anspruch 1, wobei das NFC-Vorrichtungslesegerät (12) ein RFID-Lesegerät umfasst und die NFC-Vorrichtung(en) RFID-Vorrichtung(en) umfassen,
und/oder
wobei die Liegenschaft (20) oder der Behälter mindestens eines von einer privaten oder gewerblichen Liegenschaft, einem Haus, einer Wohnung, einem Büro, einem Gelände, einem Depot, einem Briefkasten oder Postfach, einem Schließfach umfasst.

3. Verfahren nach Anspruch 1 oder 2, wobei die mindestens eine Kommunikation Informationen darüber umfasst, wie Poststücke zu der Liegenschaft (20) oder dem Behälter zugestellt/davon abgeholt werden sollen,
optional:
wobei die Informationen mindestens eines des Folgenden umfassen:
Informationen über einen Abgabe/Annahme-Standort für ein Poststück;
Informationen darüber, welche Tür der Liegenschaft zu verwenden ist;
einen Zugangscode;
Informationen über eine Gefahr, beispielsweise Anwesenheit eines Hundes oder anderen Tieres, Auftreten von Baumaßen oder anderen Arbeiten;
Informationen über den Empfänger oder Absender, beispielsweise, dass dieser eine Behinderung hat;
Informationen über geplante Veranstaltungen; und/oder
Kontaktinformationen eines Empfängers, Absenders oder sonstigen Benutzers,
weiter optional:
wobei die Zustellungs-/Abholungsanweisungen vom Empfänger, Absender oder anderen Benutzer festgelegt werden.

4. Verfahren nach einem vorstehenden Anspruch, wobei die Kommunikation eine Warnung infolgedessen umfasst, dass bestmmt wird, dass der von der Vorrichtung (2) in Bezug auf Zustellung/Abholung eines der Poststücke bestimmte Standort nicht mit der Geofence-Region für die Zustellung/Abholung des Poststücks übereinstimmt,
optional:
wobei der Standort durch die Vorrichtung (2) infolge einer Eingabe, beispielsweise durch den Benutzer, bestimmt wird, die angibt, dass das Poststück zugestellt oder abgeholt worden ist.

5. Verfahren nach einem der vorstehenden Ansprüche 2-4, wobei das Zustellungs-/Abholungsprotokoll einen von dem Benutzer durchzuführenden Arbeitsablauf beinhaltet,
optional:
der Arbeitsablauf mindestens eines des Folgenden beinhaltet:
Aufnehmen eines Fotos des Poststücks und/oder der Liegenschaft und/oder des Behälters;
Platzieren der Zustellungs-/Abholungsvorrichtung (2) in der Nähe, oder in Kommunikation mit, der oder einer RFID-Vorrichtung oder anderen Kommunikationsvorrichtung;
Erhalten einer Unterschrift oder anderen Bestätigung von einem Empfänger, Absender oder anderen Benutzer.

6. Verfahren nach einem vorstehenden Anspruch, wobei die Zustellungs-/Abholungsanweisungen oder andere Informationen vonn der NFC-Vorrichtung gespeichert werden und das Verfahren Erhalten der Zustellungs-/Abholungsanweisungen oder anderen Informationen durch Kommunikation zwischen der Zustellungs-/Abholungsvorrichtung (2) und der NFC-Vorrichtung umfasst.

7. Verfahren nach einem vorstehenden Anspruch, wobei es für mindestens eines der Liegenschaften oder der Behälter, an die/von denen Poststücke zugestellt/abgeholt werden sollen, eine oder mehrere andere Liegenschaften oder Behälter, beispielsweise ein(e) oder mehrere andere Wohnungen, Apartments, Büros oder Briefkästen, innerhalb der Geofence-Region für diese Liegenschaft oder diesen Behälter gibt.

8. Verfahren nach einem vorstehenden Anspruch, das mindestens eines des Folgenden umfasst:
Anzeigen einer Liste von Liegenschaften oder Behältern innerhalb der Geofence-Region unter Verwendung der Zustellungs-/Abholungsvorrichtung (2);
Angeben, unter Verwendung der Zustellungs-/Abholgsvorrichtung, von Poststücken, die für die aktuelle Geofence-Region zugestellt/abgeholt werden sollen.

9. Verfahren nach einem vorstehenden Anspruch, das Ausgeben einer Warnung, wenn keine Kommunikation mit der NFC-Vorrichtung stattfindet, und/oder Speichern oder Ausgeben einer Bestätigung, wenn Kommunikation mit der NFC-Vorrichtung stattfindet, umfasst.

10. Verfahren nach einem vorstehenden Anspruch, das Ausgeben einer Warnung und/oder Versetzen der Zustellungs-/Abholungsvorrichtung (2) in einen Zustellungs-/Abholungsmodus infolgedessen umfasst, dass die Zustellungs-/Abholungsvorrichtung (2) eine Geofence-Region durchquert und/oder eine Grenze überschreitet,
optional:
wobei das Verfahren weiter umfasst, Ausgabe der Warnung zu verhindern und/oder Eintritt in den Zustellungs-/Abholungsmodus zu verhindern, wenn sich die Vorrichtung (2) in einem Transmodus befindet, währenddessen sich ein Benutzer oder ein Zustellungs-/Abholungsfahrzeug zwischen, zu oder von Liegenschaften oder Behältern bewegt,
weiter optional:
wobei das Verfahren weiter Überwachen einer Bewegungsgeschwindigkeit der Zustellungs-/Abholungsvorrichtung (2) und/oder eines Zustellungs-/Abholungsfahrzeugs und Versetzen der Vorrichtung (2) in den Transitmodus oder Beibehalten von diesem infolgedessen umfasst, dass die überwachte Bewegungsgeschwindigkeit, beispielsweise infolge der überwachten Bewegungsgeschwindigkeit, ein Fahren angibt,
weiter optional:
wobei das Verfahren weiter Versetzen der Vorrichtung (2) in den Transitmodus oder Beibehalten von diesem infolge einer Benutzereingabe und/oder automatisch umfasst.

11. Verfahren nach einem vorstehenden Anspruch, das weiter Folgendes umfasst:
Bereitstellen von Routeninformationen für den Benutzer über die Zustellungs-/Abholungsvorrichtung (2), und/oder
weiter umfassend Senden mindestens einer Nachricht an einen Absender/Empfänger eines Poststücks oder einen anderen Benutzer infolgedessen, dass die Benutzervorrichtung einen Standort innerhalb der Geofence-Region oder innerhalb einer weiteren, zugehörigen Geofence-Region aufweist,
optional:
wobei die weitere Geofence-Region durch eine weitere Grenze (48) definiert ist, die weiter von der Liegenschaft oder dem Behälter entfernt ist als die Grenze (32),
weiter optional:
wobei die mindestens eine Nachricht eine Warnung umfasst und/oder Zustellungs-/Abholungsinformationen, beispielsweise Unterschriftspflicht und/oder Bezahlung bei Zustellung/Abholung des mindestens einen Poststücks, umfasst.

12. Verfahren nach einem vorstehenden Anspruch, das weiter Senden von Daten an und/oder Empfangen von Daten von einem Remote-Server (4) durch die Zustellungs-/Abholungsvorrichtung (2) umfasst, wobei der Remote-Server (4) dazu konfiguriert ist, Zustellung/Abholung von Poststücken und/oder Arbeitsleistung zu überwachen und/oder Zustellungs-/Abholungsanweisungen und/oder Routeninformationen bereitzustellen,
und/oder
weiter Überwachen eines Fortschritts von Zustellung/Abholung der Poststücke und Ausgeben einer Warnung, wenn Zeiten zwischen aufeinanderfolgenden Zustellungen/Abholungen länger als erwartet sind und/oder wenn die Zustellungs-/Abholungsvorrichtung (2) oder das Zustellungs-/Abholungsfahrzeug von einer erwarteten Route abweicht,
und/oder
wobei die Zustellungs-/Abholungsvorrichtung (2) umfasst oder dazu konfiguriert ist, mit einer Drohne oder einem anderen Zustellungs-/Abholungsfahrzeug zu kommunizieren,
optional:
wobei das Verfahren Vergleichen eines Standorts der Drohne oder eines anderen Zustellungs-/Abholungsfahrzeugs zu einem Zeitpunkt der Zustellung/Abholung eines Poststücks an eine entsprechende Geofence-Region umfasst, um dadurch beispielsweise eine korrekte Zustellung/Abholung zu bestimmen.

13. Zustellungs-/Abholungsvorrichtung (2), die eine Standortbestimmungsschaltung (10) beinhaltet oder mit dieser verbunden ist, um den Standort während einer Zustellungs- und/oder Abholungsrunde zu bestimmen, wobei
die Zustellungs-/Abholungsvorrichtung (2) dazu konfiguriert ist, mit mindestens einer Datenbank (6) zu kommunizieren, die Grenzdaten speichert, die Geofence-Regionen definieren;
die Zustellungs-/Abholungsvorrichtung (2) dazu konfiguriert ist, für jede Liegenschaft (20) oder jeden Behälter eine Grenze (32) zu erhalten, die eine Geofence-Region definiert;
die Zustellungs-/Abholungsvorrichtung (2) weiter für Folgendes konfiguriert ist:
Bestimmen, unter Verwendung der Standortbestimmungsschaltung (10), ob sich die Zustellungs- und/oder Abholungsvorrichtung (2) innerhalb der Geofence-Region für eine Liegenschaft (20) oder einen Behälter befindet, für die bzw. den ein Poststück zugestellt werden oder abgeholt werden soll;
Ausgeben mindestens einer Kommunikation und/oder Durchführen mindestens einer Aktion unter Verwendung der Zustellungs- und/oder Abholungsvorrichtung (2) infolge der Anwesenheit der Zustellungs- und/oder Abholungsvorrichtung (2) in der Geofence-Region,
die Zustellungs-/Abholungsvorrichtung (2) eine handgehaltene Zustellungs-/Abholungsvorrichtung umfasst, die Standortbestimmungsschaltung (10) eine GPS-Schaltung umfasst und die Vorrichtung weiter ein Nahfeldkommunikations-, NFC, Vorrichtungslesegerät (12) umfasst,
mindestens einige der Liegenschaften oder Behälter eine NFC-Vorrichtung (28) beinhalten und die Zustellungs-/Abholungsvorrichtung (2) dazu konfiguriert ist, mit der NFC-Vorrichtung (28) zu kommunizieren,
die Kommunikation mit der NFC-Vorrichtung (28) einem Zustellungs-/Abholungsprotokoll folgt oder einen Teil von diesem bildet,
**dadurch gekennzeichnet, dass** das Zustellungs-/Abholungsprotokoll beinhaltet zu überprüfen, ob der bestimmte Standort der Zustellungs-/Abholungsvorrichtung (2) und ein gespeicherter Standort für die NFC-Vorrichtung (28) übereinstimmen, und
die Zustellungs-/Abholungsvorrichtung (2) dazu konfiguriert ist, eine Warnung auszugeben, wenn der bestimmte Standort der Zustellungs-/Abholungsvorrichtung (2) und der gespeicherte Standort für die NFC-Vorrichtung (28) nicht übereinstimmen.

14. System zum Unterstützen und/oder Überwachen von Zustellung und/oder Abholung einer Vielzahl von Poststücken, wobei jedes Poststück an eine jeweilige Liegenschaft (20) oder einen jeweiligen Behälter zugestellt oder von dort abgeholt wird und jede Liegenschaft (20) oder jeder Behälter eine jeweilige Adresse oder Kennung aufweist, wobei das System Folgendes umfasst:
eine Zustellungs-/Abholungsvorrichtung nach Anspruch 13; und
mindestens eine Datenbank (6), die Grenzdaten speichert, die Geofence-Regionen definieren, wobei die Zustellungs-/Abholungsvorrichtung (2) dazu konfiguriert ist, von der mindestens einen Datenbank (6) für jede Liegenschaft (20) oder jeden Behälter eine Grenze (32) zu erhalten, die eine Geofence-Region definiert.

15. Computerprogrammprodukt, das computerlesbare Anweisungen umfasst, die ausführbar sind, um ein Verfahren nach einem der Ansprüche 1 bis 12 durchzuführen.

## Revendications

1. Procédé d'assistance à la livraison et/ou collecte d'une pluralité d'envois postaux, chaque envoi postal étant livré ou collecté à partir d'une propriété (20) ou d'un réceptacle respectif et chaque propriété (20) ou réceptacle présentant une adresse ou un identifiant respectif, le procédé consistant à :
utiliser un dispositif de livraison et/ou collecte (2), qui inclut ou est connecté à des circuits de détermination d'emplacement (10), pour déterminer l'emplacement pendant une tournée de livraison et/ou de collecte ;
utiliser au moins une base de données (6) qui stocke des données de limite définissant des régions de géorepérage pour obtenir pour chaque propriété (20) ou réceptacle une limite (32) définissant une région de géorepérage respective ; et
le procédé consiste en outre à :
déterminer en utilisant les circuits de détermination d'emplacement (10) si le dispositif de livraison et/ou collecte (2) est au sein de la zone de géorepérage pour une propriété (20) ou un réceptacle pour lequel un envoi postal doit être livré et/ou collecté ; et
émettre au moins une communication et/ou effectuer au moins une action en utilisant le dispositif de livraison et/ou collecte (2) en réponse à la présence du dispositif de livraison et/ou collecte dans la région de géorepérage, dans lequel
le dispositif de livraison/collecte comprend un dispositif de livraison/collecte portatif, les circuits de détermination d'emplacement (10) comprennent des circuits GPS et le dispositif (2) comprend en outre un lecteur de dispositif de communication en champ proche, NFC (12),
au moins certaines des propriétés ou des réceptacles incluent un dispositif NFC (28), et le procédé comprend l'utilisation du dispositif de livraison/collecte (2) pour communiquer avec le dispositif NFC (28),
la communication avec le dispositif NFC est conforme ou fait partie d'un protocole de livraison/collecte,
**caractérisé en ce que** le protocole de livraison/collecte inclut la vérification que l'emplacement déterminé du dispositif de livraison/collecte et un emplacement enregistré pour le dispositif NFC correspondent, et
le procédé comprend l'émission d'une alerte si l'emplacement déterminé du dispositif de livraison/collecte et l'emplacement stocké pour le dispositif NFC ne correspondent pas.

2. Procédé selon la revendication 1, dans lequel le lecteur de dispositif NFC (12) comprend un lecteur RFID et le ou les dispositifs NFC comprennent un ou des dispositifs RFID,
et/ou
dans lequel la propriété (20) ou le réceptacle comprend au moins un parmi une propriété résidentielle ou commerciale, une maison, un appartement, un bureau, un site, un dépôt, une boîte aux lettres ou boîte postale, un casier.

3. Procédé selon la revendication 1 ou 2, dans lequel l'au moins une communication comprennent des informations concernant la manière dont des envois postaux doivent être livrés/collectés pour la propriété (20) ou le réceptacle,
facultativement :
dans lequel les informations comprennent au moins un parmi :
des informations concernant un emplacement de dépôt/retrait pour un envoi postal ;
des informations concernant la porte de la propriété à utiliser ;
un code d'entrée ;
des informations concernant un danger, par exemple la présence d'un chien ou autre animal, la présence de travaux de construction ou autres ;
des informations concernant le destinataire ou l'expéditeur, par exemple qu'il souffre d'un handicap ;
informations concernant des événements qui sont planifiés ; et/ou
des coordonnées d'un destinataire, expéditeur ou autre utilisateur, en outre facultativement :
dans lequel les instructions de livraison/collecte sont définies par le destinataire, expéditeur ou autre utilisateur.

4. Procédé selon l'une quelconque des revendications précédentes, dans lequel la communication comprend une alerte en réponse à la détermination que l'emplacement déterminé par le dispositif (2) par rapport à la livraison/collecte d'un des envois postaux ne correspond pas à la région de géorepérage de la livraison/collecte d'envoi postal,
facultativement :
dans lequel l'emplacement est déterminé par le dispositif (2) en réponse à une entrée, par exemple par l'utilisateur, indiquant que ledit envoi postal a été livré ou collecté.

5. Procédé selon l'une quelconque des revendications précédentes 2-4, dans lequel le protocole de livraison/collecte inclut un flux de travail à réaliser par l'utilisateur,
facultativement :
le flux de travail inclut au moins une action parmi les suivantes consistant à :
prendre une photo de l'envoi postal et/ou de la propriété et/ou du réceptacle ;
placer le dispositif de livraison/collecte (2) à proximité de, ou communiquant autrement avec, un dispositif RFID ou autre dispositif de communication ;
obtenir une signature ou autre confirmation d'un destinataire, expéditeur ou autre utilisateur.

6. Procédé selon l'une quelconque des revendications précédentes, dans lequel les instructions de livraison/collecte ou autres informations sont stockées par le dispositif NFC et le procédé comprend l'obtention des instructions de livraison/collecte ou autres informations par communication entre le dispositif de livraison/collecte (2) et le dispositif NFC.

7. Procédé selon l'une quelconque des revendications précédentes, dans lequel pour au moins une des propriétés ou réceptacles dans lesquels des envois postaux doivent être livrés/collectés, il y a une ou plusieurs autres propriétés ou réceptacles, par exemple un ou plusieurs autres appartements, bureaux ou boîtes aux lettres, au sein de la région de géorepérage pour cette propriété ou ce réceptacle.

8. Procédé selon l'une quelconque des revendications précédentes, comprenant au moins une action parmi les suivantes consistant à :
afficher une liste de propriétés ou réceptacles au sein de la région de géorepérage en utilisant le dispositif de livraison/collecte (2) ;
indiquer en utilisant le dispositif de livraison/collecte les envois postaux à livrer/collecter pour la région de géorepérage actuelle.

9. Procédé selon l'une quelconque des revendications précédentes, comprenant l'émission d'une alerte si la communication avec le dispositif NFC ne se produit pas et/ou stocker ou émettre une confirmation si la communication avec le dispositif NFC se produit.

10. Procédé selon l'une quelconque des revendications précédentes, comprenant l'émission d'une alerte et/ou le passage du dispositif de livraison/collecte (2) dans un mode de livraison/collecte en réponse au dispositif de livraison/collecte (2) passant à travers une région de géorepérage et/ou franchissant une limite,
facultativement :
dans lequel le procédé comprend en outre la prévention de l'émission de l'alerte et/ou l'empêchement du passage dans le mode de livraison/collecte si le dispositif (2) est dans un mode de transit pendant lequel un utilisateur ou le véhicule de livraison/collecte se déplace entre, vers ou depuis des propriétés ou réceptacles,
en outre facultativement :
dans lequel le procédé comprend en outre la surveillance de la vitesse de déplacement du dispositif de livraison/collecte (2) et/ou véhicule de livraison/collecte et le passage ou le maintien du dispositif (2) dans le mode de transit en réponse à la vitesse de déplacement surveillée indiquant la conduite, par exemple en réponse à la vitesse de déplacement surveillée,
en outre facultativement :
dans lequel le procédé comprend en outre le passage ou le maintien du dispositif (2) dans le mode de transit en réponse à une entrée utilisateur et/ou automatiquement.

11. Procédé selon l'une quelconque des revendications précédentes, consistant à :
fournir des informations d'itinéraire à l'utilisateur par l'intermédiaire du dispositif de livraison/collecte (2), et/ou
comprenant en outre l'envoi d'au moins un message à un destinataire/expéditeur d'envoi postal ou autre utilisateur en réponse au dispositif utilisateur présentant un emplacement au sein de la région de géorepérage ou au sein d'une région de géorepérage associée supplémentaire,
facultativement :
dans lequel la région de géorepérage supplémentaire est définie par une limite supplémentaire (48) qui est plus éloignée de la propriété ou du réceptacle que la limite (32),
en outre facultativement :
dans lequel l'au moins un message comprend une alerte et/ou comprend des informations de livraison/collecte, par exemple l'obligation de signer et/ou payer à la livraison/collecte de l'au moins un envoi postal.

12. Procédé selon l'une quelconque des revendications précédentes, comprenant en outre l'envoi de données à et/ou la réception de données d'un serveur distant (4) par le dispositif de livraison/collecte (2), dans lequel le serveur distant (4) est configuré pour surveiller la livraison/collecte d'envois postaux et/ou la performance et/ou pour fournir des instructions de livraison/collecte et/ou des informations d'itinéraire, et/ou
comprenant en outre le suivi de l'avancement de la livraison/collecte des envois postaux et l'émission d'une alerte si des délais entre des livraisons/collectes successives sont plus longs que prévu et/ou si le dispositif de livraison/collecte (2) ou le véhicule s'écarte d'un itinéraire attendu,
et/ou
dans lequel le dispositif de livraison/collecte (2) comprend ou est configuré pour communiquer avec un drone ou autre la véhicule de livraison/collecte,
facultativement :
dans lequel le procédé comprend la comparaison de l'emplacement du drone ou autre véhicule de livraison/collecte à un moment de la livraison/collecte d'un envoi postal vers une zone de géorepérage correspondante, par exemple pour ainsi déterminer la livraison/collecte correcte.

13. Dispositif de livraison et/ou collecte (2), qui inclut ou est connecté à des circuits de détermination d'emplacement (10) pour déterminer l'emplacement pendant une tournée de livraison et/ou collecte, dans lequel
le dispositif de livraison et/ou collecte (2) est configuré pour communiquer avec au moins une base de données (6) qui stocke des données de limite définissant des régions de géorepérage ;
le dispositif de livraison et/ou collecte (2) est configuré pour obtenir pour chaque propriété (20) ou réceptacle une limite (32) définissant une région de géorepérage ; et
le dispositif de livraison et/ou collecte (2) est en outre configuré pour :
déterminer en utilisant les circuits de détermination d'emplacement (10) si le dispositif de livraison et/ou collecte (2) est au sein de la zone de géorepérage pour une propriété (20) ou un réceptacle pour lequel un envoi postal doit être livré ou collecté ;
émettre au moins une communication et/ou effectuer au moins une action en utilisant le dispositif de livraison et/ou collecte (2) en réponse à la présence du dispositif de livraison et/ou collecte (2) dans la région de géorepérage,
le dispositif de livraison/collecte (2) comprend un dispositif de livraison/collecte portatif, les circuits de détermination d'emplacement (10) comprennent des circuits GPS et le dispositif comprend en outre un lecteur de dispositif de communication en champ proche, NFC (12),
au moins certaines des propriétés ou des réceptacles incluent un dispositif NFC (28), et le dispositif de livraison/collecte (2) est configuré pour communiquer avec le dispositif NFC (28),
la communication avec le dispositif NFC (28) est conforme ou fait partie d'un protocole de livraison/collecte,
**caractérisé en ce que** le protocole de livraison/collecte inclut la vérification que l'emplacement déterminé du dispositif de livraison/collecte (2) et un emplacement enregistré pour le dispositif NFC (28) correspondent, et
le dispositif de livraison/collecte (2) est configuré pour émettre une alerte si l'emplacement déterminé du dispositif de livraison/collecte (2) et l'emplacement stocké pour le dispositif NFC (28) ne correspondent pas.

14. Système d'assistance et/ou de surveillance de livraison et/ou collecte d'une pluralité d'envois postaux, chaque envoi postal étant livré ou collecté à partir d'une propriété (20) ou d'un réceptacle respectif et chaque propriété (20) ou réceptacle présentant une adresse ou un identifiant respectif, le système comprenant :
un dispositif de livraison et/ou collecte selon la revendication 13 ; et
au moins une base de données (6) qui stocke des données de limite définissant des régions de géorepérage, dans lequel le dispositif de livraison et/ou collecte (2) est configuré pour obtenir à partir d'au moins une base de données (6) pour chaque propriété (20) ou réceptacle une limite (32) définissant une région de géorepérage.

15. Produit de programme informatique comprenant des instructions lisibles par ordinateur qui sont exécutables pour mettre en œuvre un procédé selon l'une quelconque des revendications 1 à 12.
